# EUROPEAN PATENT APPLICATION

(11) **EP 4 797 137 A1**
(43) Date of publication of application: **26.08.2026**
(21) Application number: 25201981.5
(22) Date of filing: 12.09.2025
(51) Int. Cl.: G06F 21/62, G06F 9/54, H04L 9/40, H04L 67/55, G06F 16/36

(54) **INBOUND MESSAGE DETECTOR WITH ENHANCED DATA SECURITY**

(30) Priority: 25.02.2025 US 202563763108 P; 22.07.2025 US 202563848870 P; 14.08.2025 US 202519300129
(71) Applicant: Palantir Technologies Inc., Aventura, Florida 33180 (US)
(72) Inventor: CZARNECKI, Austin, Denver, 80202 (US); CROWSON, Jett, Denver, 80202 (US); ADAMCZYK, Michal, Denver, 80202 (US); GABBAMONTE, Natacha, Denver, 80202 (US)
(74) Representative: Sayer, Robert David

(57) **Abstract**

Disclosed herein are computing environments and processes for protocol-agnostic inbound data ingestion to securely and intuitively support a wide and varied range of push-based data integrations. An event detector on a perimeter network can receive inbound data from an external system. A data ingestion engine of a permissioned system can access a repository of the permissioned system, can validate the inbound data based on one or more attributes of data in the repository, and can provide a validation indication to the event detector. The event detector can provide the inbound data to the permissioned system responsive to the validation indication from the data ingestion engine.

## Description

### TECHNICAL FIELD

The present disclosure relates to a unified interface that provides the ability to easily and securely accept push-type inbound connections and data for, e.g., data ingestion.

### BACKGROUND

Data ingestion generally involves importing data for use or storage in a data store or database.

### SUMMARY

The systems, methods, and devices described herein each have several aspects, no single one of which is solely responsible for its desirable attributes. Without limiting the scope of this disclosure, several non-limiting features will now be described briefly.

There generally exists two modes of data ingestion: a pull mode wherein a primary computing system requests data across a network to an external computing system; and a push mode wherein an external computing system sends data across some network to the primary computing system. Push mode data ingestions can include event-based pushes wherein an external computing system notifies the primary computing system of the occurrence of some event via network interactions. Existing tools and models for orchestrating inbound data ingestions in software systems are non-unified, dispersed, and highly opinionated on formats, protocols, and security models, which restricts the breadth of what a user may leverage any individual tool to do.

Disclosed herein is a unified model for protocol-agnostic inbound data ingestion to securely and intuitively support the wide and varied range of push-based data ingestions, particularly in event-based systems. The unified event detector interface disclosed herein abstracts away underlying complexities and complications of a wide set of inbound data integration paradigms while still allowing for efficient integration that also protects data within a permissioned system from impermissible interaction from systems or devices over a network.

Various combinations of the above and below recited features, embodiments, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings.
FIG. 1 is a block diagram illustrating an example event detector in communication with an external system and a permissioned system.
FIGS. 2A-2B are flowcharts illustrating example operations of event detectors.
FIG. 3A is an example user interface for configuring an event detector.
FIG. 3B is an example user interface illustrating data ingestion with an event detector.
FIG. 4 is a block diagram of an example computer system useable with the various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

There generally exist two modes of data ingestion: a pull mode wherein a primary computing system requests across a network to an external computing system; and a push mode wherein an external computing system requests across some network to the primary computing system. Push mode data ingestions can include event-based pushes an external computing system notifies the primary computing system of the occurrence of some event via network interactions. Existing tools and models for orchestrating inbound data ingestions in software systems are non-unified, dispersed, and highly opinionated on formats, protocols, and security models, which restricts the breadth of what a user may leverage any individual tool to do.

Disclosed herein is a unified model for protocol-agnostic inbound data ingestion to securely and intuitively support the wide and varied range of push-based data integrations, particularly in event-based systems. The unified event detector interface disclosed herein abstracts away underlying complexities and complications of a wide set of inbound data integration paradigms while still allowing for efficient integration that also protects data within a permissioned system from impermissible interaction from systems or devices over a network.

To facilitate an understanding of the systems and methods discussed herein, several terms are described below. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like.

A Language Model is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality. LLMs can be extremely useful for natural language processing, including receiving natural language prompts and providing natural language responses based on the text on which the model is trained. LLMs may not be data security- or data permissions-aware, because they generally do not retain permissions information associated with the text upon which they are trained. Thus, responses provided by LLMs may be limited to any particular permissions-based portion of the model.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

An Ontology can comprise definitions governing data relationships and properties. An ontology can be stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types.

A Data Object (or "Object") is any data container for information representing a specific thing in the world that has a number of definable properties. For example, a data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth.

An Object Type is a type of a data object (e.g., person, event, document, and/or the like). Object types may be defined by an ontology and may be modified or updated to include additional object types. An object definition (e.g., in an ontology) may include how the object is related to other objects, such as being a sub-object type of another object type (e.g., an agent may be a sub-object type of a person object type), and the properties the object type may have.

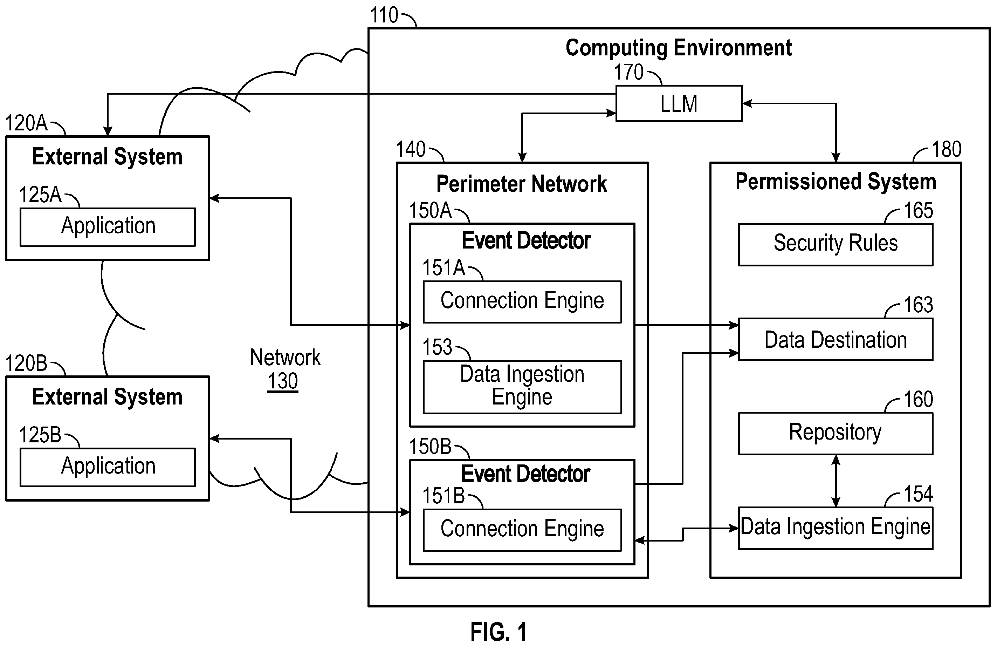

**FIG. 1** is a block diagram illustrating a perimeter network 140 in communication with external systems 120A, 120B over a network 130 and in communication with permissioned system 180. In this example, perimeter network 140, LLM 170, and permissioned system 180 are shown as implemented within the same computing environment 110. For example, computing environment 110 can include one or more hardware computer processors, computing devices, servers, etc., which may be owned and/or operated by the same entity and/or at the same physical location, that execute the operations of one or more of event detectors 150A, 150B, LLM 170, and/or permissioned system 180. In some implementations, one or more of event detectors 150A, 150B, LLM 170, and/or permissioned system 180 may be implemented remote to computing environment 110 and may communicate with computing environment 110 over a network such as network 130. As shown and/or as will be described in greater detail, perimeter network 140 can interact and/or communicate with external systems 120A, 120B and permissioned system 180. LLM 170 can interact and/or communicate with external systems 120A, 120B and permissioned system 180.

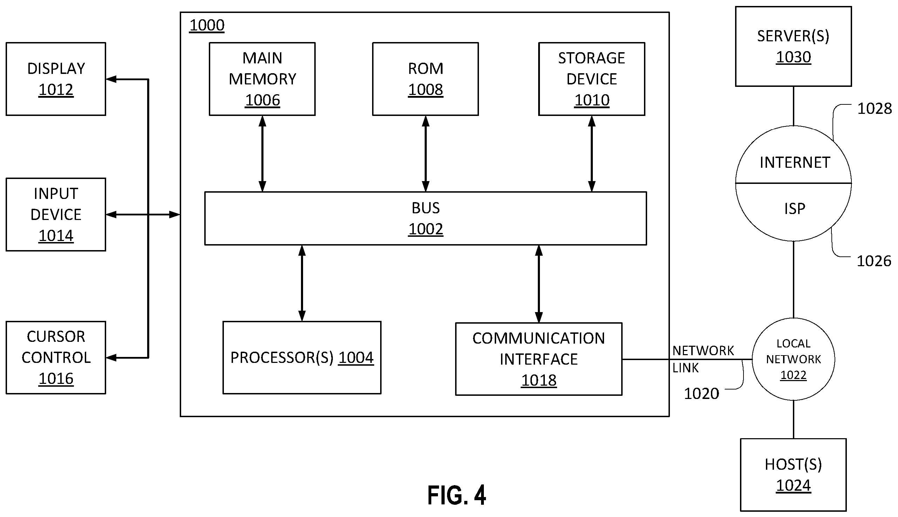

The operations of computing environment 110, including perimeter network 140, LLM 170, and/or permissioned system 180 can be performed by one or more hardware processors operating under control of computer-executable program instructions which can be stored on non-transitory computer readable media, as shown and/or described in FIG. 4. Computing environment 110 can store data, such as repository 160, in one or more of a database, memory, etc. as shown and/or described in FIG. 4.

External system 120A and/or 120B can include one or more computing devices including one or more hardware processors such as shown and/or described in FIG. 4. External system 120A includes application 125A that can include computer executable program instructions, which can be stored on non-transitory computer readable media, and when executed, can cause the external system 120A to perform one or more operations. In some implementations, external system 120A can include other applications 125A. Application 125A can be a web-based application executing in a browser, such as offline-capable web applications (e.g., progressive web applications), native applications (e.g., mobile applications, desktop applications, smart watch applications, and/or the like), cross-platform applications. Application 125A can execute on external system 120A in any type of single or multi-application execution environment, including but not limited to: web browsers (e.g., JavaScript engines, WebAssembly runtimes, extensions, plug-ins, and/or the like); operating systems (e.g., mobile OSes, desktop OSes, watch OSes, real-time OSes, virtual machine-based OSes, and/or the like); containers and containerization platforms; hypervisors (e.g., for executing multiple virtualized environments); edge computing environments; local cloud-like platforms (e.g., locally hosted environments that simulate cloud services); cross-platform run-time environments; and the like. External system 120B includes application 125B which can include similar structural and/or operational features as application 125A. In some implementations, external system 120B can include additional applications.

The network 130 can include one or more communications networks. The network 130 can include a plurality of computing devices configured to communicate with one another. The network 130 can include routers. The network 130 can include the Internet. The network 130 can include a cellular network. The network 130 can include any combination of a local area network ("LAN") and/or a wide area network ("WAN"), or the like. Accordingly, various computing devices can communicate with one another directly or indirectly via any appropriate communications links and/or networks, such as network 130 (e.g., one or more communications links, one or more computer networks, one or more wired or wireless connections, the Internet, any combination of the foregoing, and/or the like).

Communication over the network 130 can include a variety of communication protocols, including wired communication, wireless communication, wire-like communication, far-field communication (such as transferring energy via electromagnetic radiation (e.g., radio waves)). Example communication protocols can include Wi-Fi, Bluetooth^{®}, ZigBee^{®}, Z-wave^{®}, cellular telephony, such as long-term evolution (LTE) and/or 1G, 2G, 3G, 4G, 5G, etc., infrared, satellite transmission, proprietary protocols, combinations of the same, and the like.

Perimeter network 140 can comprise a physical and/or logical subnetwork comprising external-facing services exposed to interact with and/or communicate over network 130. For example, perimeter network 140 can include one or more hardware processors configured to execute program instructions (which may be stored on non-transitory computer readable media) to perform one or more operations. Perimeter network 140 can be hosted on one or more servers such as web servers, mail servers, FTP servers, and/or VoIP servers. As an example, perimeter network 140 may comprise a subdomain and permissioned system 180 may comprise a main domain. Perimeter network 140 can comprise a DMZ (demilitarized zone) domain or DMZ network, for example. Example external-facing services of perimeter network 140, which can be executed as event detector 150A and/or event detector 150B, can include web services (communicating via HTTP, for example, such as webhooks), mail services (communicating via SMTP for example), file transfer services (communicating via FTP for example), and/or any other service communicating via any other protocols such as transmission control protocol (TCP) such as websockets, minimal lower layer protocol (MLLP), or the like.

Perimeter network 140 can include a dedicated communication endpoint which can be isolated from other communication endpoints within permissioned system 180 which can inhibit external systems 120A, 120B from having direct access to, and/or communication with, the permissioned system 180 over network 130. Example dedicated communication endpoints include an HTTP endpoint such as a Domain Name System (DNS) address corresponding to a URI (e.g., on the perimeter network 140 which may be a subdomain), an SMTP endpoint which can correspond to an email address, an FTP endpoint, an MLLP endpoint, User Datagram Protocol (UDP) endpoint, an IP address, a server, or the like. Event detectors 150A, 150B, can listen for or detect event data communicated to dedicated communication endpoints and can process said event data as described herein.

In this example, perimeter network 140 includes event detector 150A and event detector 150B. In some implementations, perimeter network 140 can include additional event detectors. In some implementations, perimeter network 140 may have only a single event detector. In some implementations, computing environment 110 may have additional perimeter network(s) which may each have respective event detector(s). For example, perimeter network 140 may comprise a subdomain and another perimeter network may comprise another subdomain. In some implementations, all event detectors associated with a single external system can operate on the same perimeter network or in some cases as shown here, event detectors associated with different external systems can operate on the same perimeter network. In some implementations, computing environment 110 may not include perimeter network 140 and event detectors 150A, 150B may operate without perimeter network 140. In some implementations, perimeter network 140 may be a Virtual Private Network (VPN) that can directly tunnel data from a private network and/or external system to computing environment 110.

Event detector 150A includes connection engine 151A and data ingestion engine 153. **Connection engine 151A** can facilitate communication with external system 120A using one or more communication protocols such as HTTP, FTP, SMTP, TCP, MLLP, UDP or the like. Connection engine 151A can specify one or more communication endpoints to which the external system 120A can communicate data. Event detector 150A can provide the communication endpoint to the external system 120A either directly or indirectly (e.g., via another user computing device). In some implementations, connection engine 151A can implement user-defined custom logic or functions to govern communication with external system 120A.

Connection engine 151A can receive a key from external system 120A, which may be a secret such that external system 120A controls access to and/or knowledge of the key. The key may be a passcode comprising one or more alpha-numeric characters. The external system 120A can provide the key to the event detector 150A either directly or indirectly (e.g., via another user computing device) such that event detector 150A can have access to and/or maintain the key. Connection engine 151A can use the key to authenticate and establish communication with external system 120A. For example, connection engine 151A can authenticate a connection and/or data received from external system 120A with the key, for example, to ensure that data is received from verified sources. In some implementations, connection engine 151A can communicate without use of a key.

Connection engine 151A can authenticate communication connections with external system 120A and/or data received from external system 120A. Connection engine 151A can accept or reject requests to establish communication and/or receive data based on authentication schemes. In some implementations, users can define logic for accepting/rejecting connections and/or data. Connection engine 151A can provide this ability with both pro-code (e.g., user-written platform logic) and no-code (proprietary functionality) tools. For example, a websocket provider might send a websocket connection request which contains a known header with some hash signature. A user could define a set of criteria and/or logic for the connection engine 151A to accept or reject that connection. Even once a connection is established, user-defined logic can govern whether connection engine 151A accepts or rejects individual transmission of data from the external system 120A.

External system 120A may be a push-based system such as an event-based push system. For example, external system 120A can automatically push data to event detector 150A (e.g., with a webhook) in response to a predefined event occurring at application 125A. Events may depend on the specific application 125A that is executing and can include examples such as data creations, data updates, data deletions, data modifications, data transmissions, etc. In some aspects, event detector 150A may not request data from external system 120A in a pull mode of data ingestion. External system 120A can be configured with which events to push to the event detector 150A.

Event detector 150A may not be able to force any connection parameters (e.g., protocol type, authentication routines, etc.) onto the external system 120A such as if the external system 120A is required to operate according to self-governing and/or proprietary parameters. When external system 120A governs one or more connection parameters with the event detector 150A, the event detector 150A may have the responsibility to conform to the expected connection parameters. Event detector 150A may not make any assumptions about what connections parameters should be required, allowing event detector 150A to conform to any necessary parameters. For example, event detector 150A may operate agnostic to any particular authorization scheme allowing event detector 150A to flexibly conform to an authorization scheme imposed by external system 120A. For example, event detector 150A can use some property of the inbound data from the external system 120A to authorize ingestion of said data, can implement a user-provided authorization scheme, or can operate without authenticating data connections and/or ingestions.

**Data ingestion engine 153** can validate inbound data from external system 120A. Data ingestion engine 153 can validate one or more attributes of inbound data such as the source of the data which can ensure the data originates from the proper external system, which can prevent data ingestion from unverified sources. Data ingestion engine 153 can also validate other attributes of inbound data such as data format, data type, and/or data properties defined by an ontology and/or data properties defined by a user. Validation may fail if inbound data has one or more improper format, type, properties, and/or source. Data ingestion engine 153 may not have access to permissioned system 180 or data stored therein, and may thus validate inbound data without accessing data stored in the permissioned system 180. Data ingestion engine 153 can validate inbound data based on user-defined validation logic which can include and/or operate according to ingress rules which may also be user-defined and/or defined by the permissioned system 180. External system 120A may dictate a validation protocol for the data ingestion engine 153 to follow.

Event detector 150A can provide inbound data to data destination 163. In some implementations, event detector 150A may provide the inbound data to the data destination 163 responsive to validating the inbound data (and only if the inbound data is successfully validated). In some implementations, event detector 150A may not provide the inbound data to data destination 163 responsive to a failed validation. In some implementations, event detector 150A can modify the inbound data, such as by marking the data modifying the data format, and/or automatically redacting sensitive information (e.g., tokens) from the data before providing the data to the data destination 163. Event detector 150A can output data as a data stream (such as a Kafka data stream), a static dataset, arbitrary user-written/managed compute, various pieces of downstream kinetic logic (actions), etc. In some implementations, event detector 150A can format data into an acceptable format for output which may be independent of and/or agnostic to the connection engine 151A. For example, event detector 150A can process data into a standard format for downstream processing regardless of the communication protocol used by the connection engine 151A to receive the data from the external system 120A. For example, connection engine 151A can receive a REST message over HTTPS, an MLLP message over TCP, an email over SMTP, and/or a file over SFTP and event detector 150A can transform such data into, for example, rows in a downstream event processing queue.

Event detector 150A can modify ingested data according to security rules 165 of the permissioned system 180, such as by marking the data or metadata thereof. For example, event detector 150A can mark data to indicate one or more of a source of the data (e.g., the external system of origin), data properties, data types, the event detector at which the data was received, whether the data is sensitive, who has permission to access the data, where the data can be stored, etc. Event detector 150A can mark data as sensitive based on the external system from which the data originates or based on what the data is. For example, event detector 150A can be configured to mark all data coming from a particular external system as sensitive. Event detector 150A can mark the data based on user-defined logic governing how inbound data is to be marked. Event detector 150A can mark data in a manner that adheres to the security rules 165 of the permissioned system 180 such that the permissioned system 180 can know how to handle the data if and when it is imported to the permissioned system 180. For example, permissioned system 180 can handle the data based on how it was marked by data ingestion engine 153 in accordance with the security rules 165. For example, data markings can indicate who has permission to access the data, appropriate actions that can be taken with the data, where the data can be stored, whether a user must review the data, etc.

**Event detector 150B** includes connection engine 151B which can include similar structural and/or operational features as connection engine 151A shown and/or described herein. Connection engine 151B can establish and/or authenticate communication between event detector 150B and external system 120B. Event detector 150B can receive data from external system 120B. In some implementations, event detector 150A and event detector 150B can detect inbound data at the same communication endpoint such as the same HTTP endpoint (e.g., URI), or in some cases can detect inbound data at different communication endpoints from each other.

**Permissioned** system **180** includes security rules 165, data destination 163, repository 160, and data ingestion engine 154. Security rules 165 can include logic and/or definitions that specify how to handle data within the permissioned system 180. Security rules 165 can be defined by a user. Security rules 165 can include ingress rules governing which data is allowed to enter permissioned system 180. Security rules 165 can include egress rules governing which data is allowed to leave permissioned system 180. Data destination 163 can include one or more of non-volatile storage (e.g., a hard drive) for long term storage (e.g., in a database which in some cases may be repository 160), volatile memory (e.g., RAM, CPU register, etc.) for processing and/or execution by a function of permissioned system 180, a buffer for temporary holding, a location accessible by LLM 170, a communication port for communication outside of the permissioned system 180 and/or computing environment 110, or the like. Thus, permissioned system 180 can process, store, communicate, etc. data provided to data destination 163 from event detectors 150A, 150B. Providing data to data destination 163 can be referred to as importing data and may or may not include storing data. Repository 160 can include one or more databases stored in computer readable media. Repository 160 can include and/or have access to an ontology comprising definitions that govern relationship and/or properties of data stored in the repository 160. For example, the repository 160 can store one or more data objects having data types, properties, and relationships governed by definitions in an ontology.

**Data ingestion engine 154** can interact with event detector 150B. Data ingestion engine 154 can execute responsive to a call from event detector 150B. For example, event detector 150B can cause data ingestion engine 154 to execute when event detector 150B receives inbound data from external system 120B. Data ingestion engine 154 can validate inbound data from external system 120B, such as to determine whether inbound data adheres to data ingress rules. For example, data ingestion engine 154 can be programmed with custom validation logic and/or ingress rules, which can be user-defined, to ensure only validated inbound data is imported to permissioned system 180. Data ingestion engine 154 can perform any of the validations described with respect to data ingestion engine 153. Moreover, data ingestion engine 154 has access to data in repository 160 (e.g., searching, finding, analyzing, and/or retrieving data) and can validate based on data in the repository 160. For example, data ingestion engine 154 can access repository 160 to validate whether inbound data at the event detector 150B is redundant of data already in repository 160. Data ingestion engine 154 can validate inbound data based on one or more attributes of data in the repository 160. Said attributes can include the existence of data in the repository 160, a format of data in the repository 160, data type of data in the repository 160, data properties of data in the repository 160, a time that data in the repository 160 was stored there, a source from which the data in the repository 160 originated, an event detector which received the data in the repository 160, etc. Said attributes can be defined by an ontology. For example, ingress rules can require that one or more attributes of the inbound data correspond to (e.g., match) attributes of data in the repository 160 and data ingestion engine 154 can validate that the attributes correspond. For example, data ingestion engine 154 can validate (based on ingress rules) that inbound data has a relationship with data in the repository 160 as defined by the ontology, or that the inbound data has the same data type as data in the repository 160 as defined by the ontology, or that the inbound data shares common data properties with data in the repository 160 as defined by the ontology, etc.

Data ingestion engine 154 can be configured with logic that governs access to the repository, which may be referred to as access rules. Access rules can be user-defined. Access rules can limit the scope of access of the data ingestion engine 154 to the repository 160. For example, a user can program the data ingestion engine 154 with access rules that restrict which data in the repository 160 the data ingestion engine 154 can access. Data ingestion engine 154 can operate to respect access rules and/or security rules 165 (which may be based on data markings) which for example may inhibit data ingestion engine 154 from accessing certain data. Accordingly, data ingestion engine 154 can be governed with controlled access to repository 160 which can enhance security of repository 160.

Data ingestion engine 154 can communicate with event detector 150B. Data ingestion engine 154 can generate a validation indication pursuant to validating one or more aspects of inbound data. Data ingestion engine 154 can provide the validation indication to event detector 150B which can inform event detector 150B whether to proceed with providing inbound data to permissioned system 180. Data ingestion engine 154 can generate a validation indication in accordance with data egress rules which govern data communicated from data ingestion engine 154 to event detector 150B. For example, data ingestion engine 154 can be programmed with data egress rules restricting communication of data from repository 160 to event detector 150B to ensure data from repository 160 remains secure and inaccessible to external systems. Egress rules, which may be user-defined, can thus inhibit data extraction from permissioned system 180. Thus, in some aspects, a validation indication generated by data ingestion engine 154 may not include data from repository 160. For example, data ingestion engine 154 can access repository 160 to validate one or more aspects of inbound data, but rather than provide data from the repository 160 to the event detector 150B, the data ingestion engine 154 may instead generate a validation indication without repository data (as dictated by egress rules) and instead including only an indication of a validation, for example, an indication that data was previously stored in the repository 160 without the actual data that was stored in repository 160. Egress rules may correspond to data markings such that data ingestion engine 154 can respect data markings.

Communication between event detector 150B and data ingestion engine 154 may be controlled by communication rules. For example, event detector 150B may be configured to communicate with only the data ingestion engine 154 and not with any other data ingestion engines. In some aspects, data ingestion engine 154 can be configured to communicate with only event detector 150B and not any other event detectors. Controlling communication between event detectors and data ingestion engines can provide additional security to permissioned system 180 such as by inhibiting data extraction through unintended communication from a data ingestion engine 154 to an unintended event detector. In some implementations, a user can define such communication connections. In some implementations, computing environment 110 can monitor communication between event detectors and data ingestion engine 154 to ensure unauthorized communication does not occur and/or to ensure restricted data is not communicated from data ingestion engine 154 to an event detector. For example, computing environment can monitor that data ingestion engine 154 communicates with event detector 150B (and only event detector 150B), and/or that data ingestion engine 154 does not provide data to event detector 150B in violation of egress rules. In some implementations, computing environment 110 can disable event detector 150B (or event detector 150A) responsive to determining that an improper communication connection was established between data ingestion engine 154 and the wrong event detector and/or that restricted data was communicated from data ingestion engine 154 to an event detector.

Event detector 150B can perform one or more actions responsive to receiving a validation indication from data ingestion engine 154. For example, event detector 150B can provide inbound data to data destination 163 (responsive to a successful validation) or can provide an indication to external system 120B corresponding to the validation indication from the data ingestion engine 154 to provide an indication to external system 120B of whether validation was successful and reasons for why or why not.

In some implementations, event detector 150A can interact with data ingestion engine 154. For example, data ingestion engine 153 can at least partially validate inbound data without accessing repository 160) and data ingestion engine 154 can also at least partially validate inbound data (based on accessing repository 160). In some implementations, data ingestion engine 153 can perform all validations and/or data ingestion engine 154 can perform all validations. In some implementations, event detector 150B can include a data ingestion engine that operates on the perimeter network 140 and that does not have access to repository 160.

In some implementations, LLM 170 can interact with permissioned system 180 such as to access inbound data ingested from event detectors 150A, 150B to permissioned system 180. Such data may be stored in repository 160. LLM 170 and permissioned system 180 can exchange data with each other, including a series of queries and responses, until LLM 170 has accessed sufficient data to perform one or more processes. LLM 170 can generate supplemental data based on interactions with the permissioned system 180. LLM 170 can provide the supplemental data to the external system 120A, which can include data that the LLM 170 generated. As an example, after successfully validating and ingesting inbound email data from event detector 150A and/or 150B to the permissioned system 180, LLM 170 can access said email data (and optionally additional email data from the repository 160 that is associated with the inbound email data) and can generate a draft response email, based on interactions with permissioned system 180. LLM 170 can provide the draft response email to the external system 120A for example for a user to access via application 125A. In some implementations, LLM 170 can generate a response to external system 120A or 120B indicating a status of inbound data which response can be sent by LLM 170 on behalf of event detector 150A and/or event detector 150B. As another example, LLM 170 can at least partially validate inbound data such as by validating ingress rules. In some implementations, LLM 170 can interact with event detector 150A (including interacting with data ingestion engine 153), event detector 150B, and/or data ingestion engine 154, for example, to generate a response to external systems 120A/120B and/or to at least partially validate inbound data.

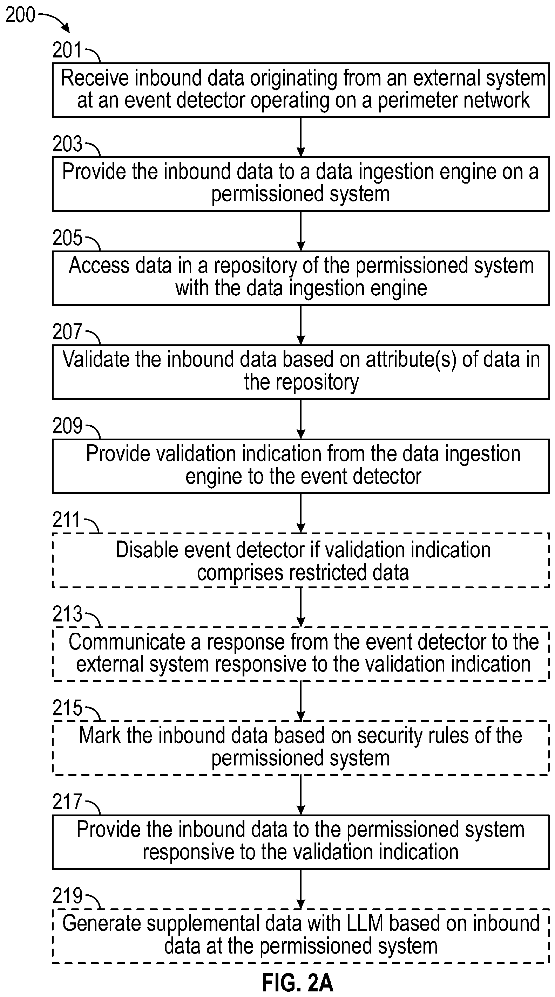

**FIG.** 2A is a flowchart illustrating an example process 200 of validating inbound data. This process, in full or parts, can be executed by one or more hardware processors of a computing environment, whether they are associated with a singular or multiple computing devices, and even devices in remote or wireless communication. By way of example, event detector 150B and/or data ingestion engine 154 shown and/or described herein can implement one or more blocks of process 200. The implementations of this process may vary and can involve modifications like omitting blocks, adding blocks, and/or rearranging the order of execution of the blocks. Process 200 serves as an example and is not intended to restrict the present disclosure.

At block 201, an event detector operating on a perimeter network can receive inbound data originating from an external system. The event detector can receive inbound data at a communication endpoint, such as an HTTP endpoint or SMTP endpoint, which may be isolated from other communication endpoints of a permissioned system. The perimeter network may comprise a subdomain and the permissioned system may comprise a main domain. The event detector can establish communication with the external system based on providing the communication endpoint to the external system and receiving an authentication key from the external system. In some aspects, the external system can push data to event detector automatically without requests from event detector, such as automatically in response to one or more events occurring on an application of the external system.

At block 203, the event detector can provide the inbound data to a data ingestion engine operating on the permissioned system. The data ingestion engine may have access to data residing within the permissioned system such as data stored within a repository of the permissioned system.

At block 205, the data ingestion engine can access a repository of the permissioned system. The data ingestion engine can access data in the repository that is associated with the inbound data, which in some cases can be determined from the data itself (e.g., from data types, properties, and/or relationships defined in the ontology) or may be determined from other information such as instructions from the external system and/or event detector. The data ingestion engine may have limited access to the repository governed by one or more access rules, which may be user-defined. For example, a user can program the data ingestion engine with access rules to limit which data in the repository the data ingestion engine can access (e.g., search, discover, view, retrieve, and/or analyze). The access rules can restrict access based on data type, data storage location, when the data was stored in the repository, data properties, data relationships, external system from which the data originated, which event detector received the data, metadata of the data, etc. Thus, although the data ingestion engine may have access to the repository, the scope of that access can be controlled (e.g., by a user) to enhance computer security at least by imposing strong data governance controls.

As an example, inbound data may comprise medical information that may be associated with a specific patient. The data ingestion engine can access data in the repository associated with the medical information such as data that is associated with the same patient, or that originated from the same external system, or that was stored in the repository within a certain time frame, etc. The data ingestion engine may be restricted by access rules from accessing other data in the repository that is not associated with the inbound data, such as data that is associated with another patient.

At block 207, the data ingestion engine can validate the inbound data based on one or more attributes of the associated data in the repository. Attributes of data in the repository can include existence of the data, data type, data properties, data relationships, data sensitivity markings, location of data storage, time of data storage, origin of data (e.g., externally system), event detector that ingested the data, etc. Validating the inbound data can include validating whether the inbound data adheres to ingress rules of the permissioned system which can ensure the inbound data can be properly imported to the permissioned system. Validation can be performed based on requirements provided by an external system and/or based on configuration of an event detector.

Continuing with the medical information example from block 205, the inbound data may comprise medical information that is to be imported to the permissioned system (e.g., for storage, processing, analysis, etc.). The data ingestion engine can validate whether importing such data would violate any data ingress rules of the permissioned system. For example, the data ingestion engine could validate whether the inbound data already exists in the repository (e.g., to avoid importing redundant data or to ensure data was successfully imported) and/or could validate whether the inbound data is associated (based on relationships/properties of an ontology) with data already stored in a repository of the permissioned system.

In some implementations, the data ingestion engine can validate the inbound data without accessing the repository and/or validation may not be based on attributes of data in the repository. Examples of such validations are discussed at block 253 of process 250.

In some implementations, the data ingestion engine performs one or more validations after inbound data has been imported to the permissioned system. For example, the data ingestion engine can validate whether one or more conditions have been satisfied with respect to the inbound data such as whether the inbound data was successfully stored in the repository. In such implementations, the data ingestion engine can provide a validation indication to the event detector before and/or after the event detector has imported inbound data to the permissioned system.

At block 209, the data ingestion engine can provide a validation indication to the event detector. The data ingestion engine can generate the validation indication based on data egress rules, which may be user defined. For example, a user can program the data ingestion engine with egress rules to govern data communication from the data ingestion engine to the event detector. The egress rules can limit the scope of communication and can thus provide enhanced computer security of the permissioned system by inhibiting data extraction from the permissioned system. For example, egress rules can restrict the data ingestion engine from including any data (or particular data) from the repository as part of the validation indication.

Continuing with the medical information example from blocks 205-207, the inbound data may comprise information from medical examination "X" for patient "John Doe" that is to be imported to the permissioned system. The data ingestion engine can access data in the repository to determine whether the inbound data is valid for importing to the permissioned system. For example, the data ingestion engine can determine whether importing the inbound data complies with legal rules based on data in the permissioned system. As another example, the data ingestion engine can access a limited set of data in the repository, such as data associated with patient John Doe (as defined by data relationship in the ontology), with such access being governed by access rules as described herein and authorized under applicable legal and regulatory frameworks. The data ingestion engine can determine whether data in the repository associated with patient John Doe already contains information from medical examination "X" to avoid importing redundant data in accordance with data ingress rules. Responsive to determining the repository does not already include such information, the data ingestion engine can generate a validation indication indicating the inbound data is valid for importing to the permissioned system. The data ingestion engine can generate the validation indication in conformance with egress rules which may restrict the data ingestion engine from including data from the repository in the validation indication. For example, although accessing data in the repository associated with patient John Doe as part of the validation, the data ingestion engine may not include such information in the validation indication that is associated with John Doe accessed in the repository and instead may only include a yes/no response. Thus, the data ingestion engine can be restricted by egress rules from providing data from the permissioned system to the event detector which inhibits data extraction to an external system. In some implementations, data egress rules may allow for the data ingestion engine to include at least some of the information from the repository in the validation indication in accordance with the data egress rules.

At block 211, the computing environment can optionally disable the event detector if the validation indication comprises restricted data. Restricted data can include data that violates an egress rule, or data from a data ingestion engine unassociated with the event detector. Ensuring technical compliance with egress rules supports strong data governance. In some implementations, the computing environment can disable the event detector before the event detector receives data from an external system. For example, the computing environment can disable the event detector based on permission policies to inhibit the event detector from receiving data from an external system.

At block 213, the event detector can optionally communicate a response to the external system responsive to the validation indication from the data ingestion engine. The response may be the same and/or modified from the validation indication. For example, the event detector can communicate a response to the external system indicating that inbound data was successfully stored in the permissioned system, or that inbound data was previously stored in the permissioned system, or that the inbound data violates an ingress rules, or the like. In some implementations, an LLM can generate and/or provide a response to the external system, which can be provided on behalf of event detector or in combination with a response provided from the event detector. In some implementations, the LLM can at least partially generate a response which the event detector can provide to the external system or the event detector can at least partially generate a response which the LLM can provide the external system.

At block 215, the event detector can optionally mark the inbound data based on security rules of the permissioned system. Marking the inbound data can include adding and/or modifying metadata of the inbound data. Marking the inbound data can include indicating one or more of a data origin, data type, data format, data properties, data relationships, which event detector received the inbound data, permission associated with the inbound data, or the like. Advantageously, marking the inbound data can allow the permissioned system to handle the inbound data properly according to its security rules. For example, based on the markings, the permissioned system can know where to store the inbound data, how the data can be processed, and/or who has permission to access the inbound data. Thus, by marking the inbound data, the data ingestion engine (or event detector) can respect the security rules of the permissioned system.

At block 217, the event detector can provide the inbound data to the permissioned system responsive to the validation indication from the data ingestion engine (only if the validation was successful, for example). Providing inbound data from the event detector to the permissioned system can be referred to as importing data and can including storing the inbound data in the permissioned system in volatile memory and/or non-volatile storage, processing the inbound data at the permissioned system, providing the inbound data to an LLM associated with the permissioned system, communicating the inbound data away from the permissioned system, etc.

At block 219, an LLM can optionally generate supplemental data based on the inbound data. For example, the LLM can access the inbound data imported to the permissioned system and can generate supplemental data corresponding to the inbound data. For example, inbound data may relate to an initial email from external system and LLM can generate a draft reply email for replying to the initial email.

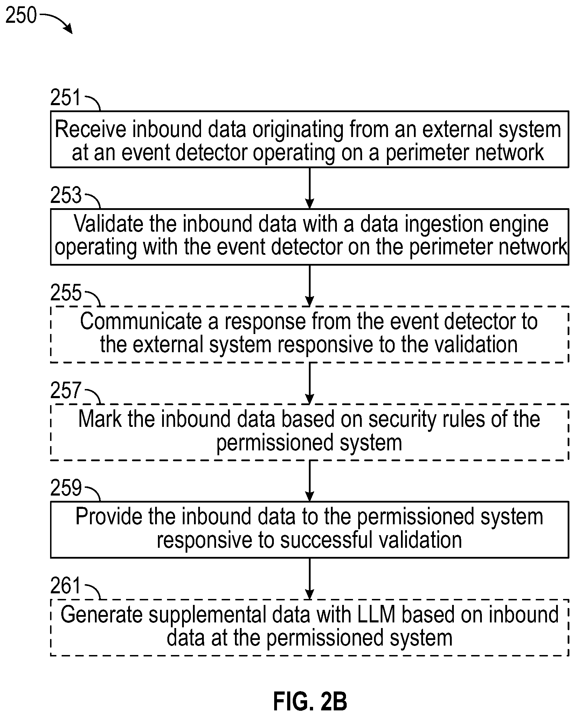

**FIG. 2B** is a flowchart illustrating an example process 250 of validating inbound data. This process, in full or parts, can be executed by one or more hardware processors of a computing environment, whether they are associated with a singular or multiple computing devices, and even devices in remote or wireless communication. By way of example, event detector 150A and/or data ingestion engine 153 shown and/or described herein can implement one or more blocks of process 250. The implementations of this process may vary and can involve modifications like omitting blocks, adding blocks, and/or rearranging the order of execution of the blocks. Process 250 serves as an example and is not intended to restrict the present disclosure.

At block 251, an event detector operating on a perimeter network can receive inbound data originating from an external system such as described at block 201 of process 200.

At block 253, a data ingestion engine can validate the inbound data. The data ingestion engine can operate with the event detector on the perimeter network. Accordingly, the data ingestion engine may not have access to data in a permissioned system. Thus, the data ingestion engine may validate the inbound data without accessing data in the permissioned system. The data ingestion engine can validate whether inbound data adheres to ingress rules. The data ingestion engine can validate the inbound data based on one or more attributes of the inbound data such as a source from which the inbound data originates, data type of the inbound data, data relationships of the inbound data, data properties of the inbound data, time the event detector received the inbound data, the event detector that received the inbound data, format of the inbound data, or the like. For example, the data ingestion engine can deny successful validation if the inbound data originates from an unknown external system which can prevent data ingestions from unverified sources, or could deny successful validation if the inbound data is associated with the wrong person as determined by data relationships defined in the ontology, or could deny successful validation if the inbound data has the wrong data type or the wrong format. In some implementations, the data ingestion engine can validate inbound data based on one or more cryptographic algorithms which can be used to verify the integrity and/or authenticity of inbound data. Validating the inbound data can be based on a key shared with the event detector from the external system, message signing, and/or time the data was sent.

At block 255, data ingestion engine (or event detector) can optionally communicate a response to the external system responsive to the validation, for example, as described at block 213 of FIG. 2A. The response can be generated, in whole or in part, by the data ingestion engine and/or an LLM interacting with the data ingestion engine. The response can indicate whether the inbound data was successfully validated, for example.

At block 257, the data ingestion engine (or event detector) can optionally mark the inbound data based on security rules of the permissioned system, for example as described at block 215 of FIG. 2A.

At block 259, the event detector can provide the inbound data (with optional markings) to the permissioned system. In some implementations, the event detector may only provide the inbound data to the permissioned system responsive to successful validation. Providing the inbound data to the permissioned system can include providing the inbound data to a destination in the permissioned system such as non-volatile storage (e.g., a hard drive) for long term storage (e.g., in a database/repository), to volatile memory (e.g., RAM, CPU register, etc.) for processing, to a buffer for temporary holding, to a communication port for communication outside of the permissioned system, or the like.

At block 261, the LLM can optionally generate supplemental data based on the inbound data, for example, as described at block 219 of FIG. 2A.

One or more aspects of process 250 can be combined with process 200 or vice versa. For example, a data ingestion engine operating with an event detector on a perimeter network can partially validate inbound data (without accessing the permissioned system) and another data ingestion engine operating on the permissioned system can partially validate the inbound data based on accessing a repository of the permissioned system.

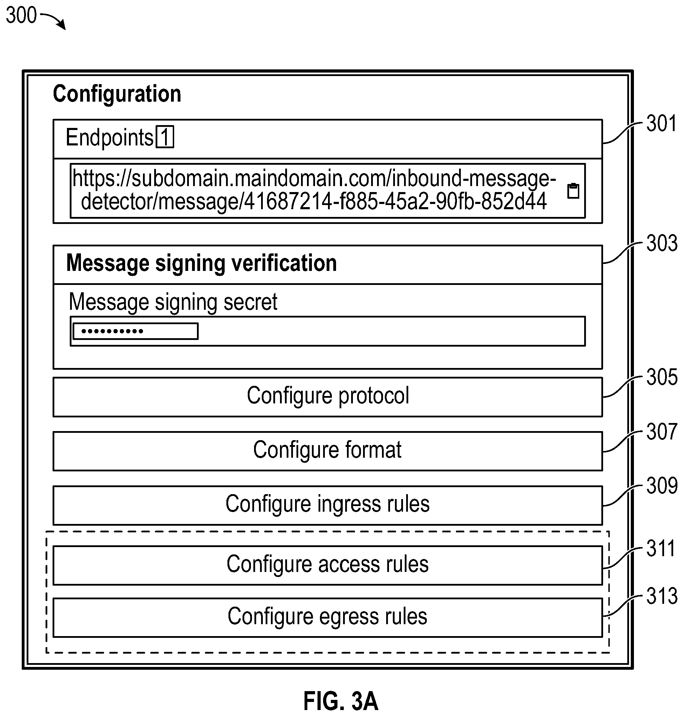

**FIG. 3A** is an example user interface 300 for configuring an event detector or various aspects of an event detector. In this example, user interface 300 includes elements 301-313 for configuring aspects of the event detector. Elements 301-313 can include various user interface controls for effectuating the configurations, such as text input fields, drop down menus, sliders, images, hyperlinks, pop-up dialogue boxes, or the like. In some implementations, a user can manually configure aspects of event detector via elements 301-313 such as by entering computer executable program instructions. In some implementations, an LLM can generate computer executable instructions to configure the event detector based on free form language input into elements 301-313 by a user. A computing environment, such as computing environment 110, can generate user interface data for rendering user interface 350.

A user can configure the event detector with a communication endpoint via element 301. For example, a user can manually input the communication endpoint into a text input field of element 301. In some implementations, a computing system can automatically generate a communication endpoint and auto populate element 301 with the communication endpoint for display to a user, which the user can further modify if needed. An event detector configured with communication endpoint configured in element 301 can listen for or detect event data received at that communication endpoint. In this example, the communication endpoint is an HTTP endpoint although other types of communication endpoints (e.g., for SMTP, FTP) as discussed herein.

A user can configure the event detector with a key via element 303. For example, a user can manually enter the key into a text input field of element 303. The key may have been generated at an external system. The key may comprise a combination of alpha-numeric characters. The event detector can authenticate and/or establish communication with the external system based on a least the key configured in element 303. In some implementations, the event detector can validate data received from an external system based on the key to ensure data is received from a verified source. In some implementations, the event detector can be configured with a plurality of keys which can be owned by an external system or a permissioned system. In some implementations, the event detector can be configured to validate message permissions by integrating with an external system's validation system.

A user can configure the event detector with a communication protocol via element 305. The communication protocol can correspond to the communication endpoint configured in element 301. In some implementations, a computing system can automatically populate a communication endpoint based on a protocol input into element 305 or can automatically a protocol in element 305 based on a communication endpoint input into element 301. For example, if a user manually enters HTTP as the communication protocol in element 305, the computing system can automatically generate and/or populate an HTTP communication endpoint in element 301 for a user to view, modify, and/or accept.

A user can configure the event detector with an acceptable data format in element 307. The event detector can at least partially validate data received from an external system based on the data format configuration of element 307. For example, a user can specify data object types, data relationships, etc. that dictate how to validate inbound data.

A user can configure the event detector with ingress rules at element 309. The event detector can at least partially validate inbound data based on the ingress rules. Ingress rules can specify which external systems from which the event detector can receive data. Element 309 can be automatically pre-populated with ingress rules which a user can accept or reject, such as via a drop-down menu.

One or more aspects of an event detector that are configured in user interface 300 operate on a perimeter network, such as aspects configured in elements 301-309, while one or more aspects of event detector can operate on permissioned system such as aspects configured in elements 309-313. For example, a user can configure aspects of event detector 150B and/or data ingestion engine 154 via user interface 300. Thus, in some cases, ingress rules configured at element 309 can be based on accessing data in a permissioned system. For example, ingress rules can include rules relating to checking data stored in permissioned system to validate inbound data is associated with data in the permissioned system, to prohibit importing redundant data, and/or to validate inbound data was successfully imported to permissioned system.

A user can configure access rules at element 311. The access rules can govern operation of a data ingestion engine operating on a permissioned system that interacts with the event detector. The access rules can govern interaction with data stored in the permissioned system to control scope of access to said data.

A user can configure egress rules at element 313. The egress rules can govern operation of a data ingestion engine operating on a permissioned system that interacts with the event detector. The egress rules can govern the scope of communication between the data ingestion engine operating on the permissioned system and the event detector.

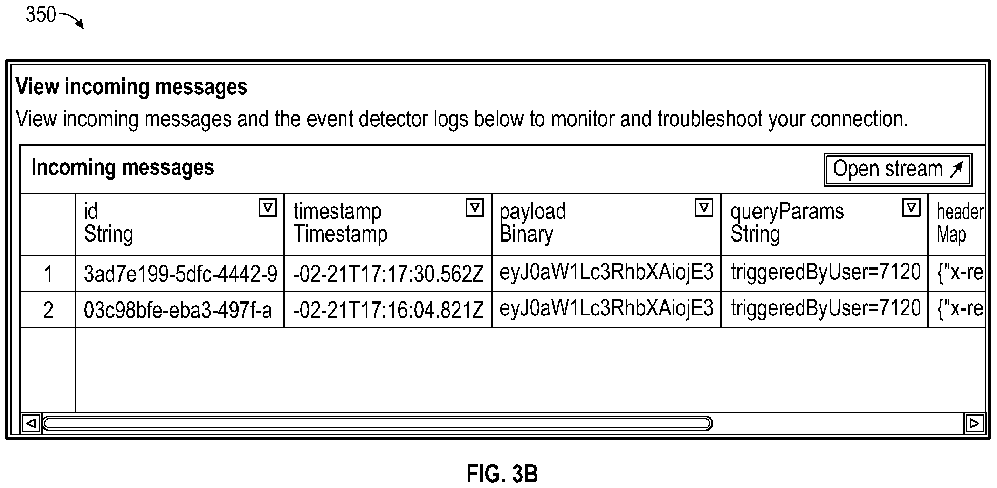

**FIG. 3B** is a user interface 350 showing an example log for monitoring communication connection and/or data ingestion with an event detector. User interface 350 can provide telemetry that can indicate how data is being ingested, why connections with external systems are accepted/rejected, etc. User interface 350 includes rows of data with each row corresponding to a different inbound message. The rows of data comprise a plurality of data sections such as ID, timestamp, payload, query parameters, headers, etc. The sections of data can indicate one or more of the source of the data (e.g., which external system), the time the data was received at the event detector, the payload of the data, a user associated with the data, etc. In some implementations, a data ingestion engine validates inbound data based on one or more sections of data shown in user interface 350. A computing environment, such as computing environment 110, can generate user interface data for rendering user interface 350. The computing environment can update user interface 350 periodically such as every few seconds. The computing environment can update user interface 350 automatically in response to receipt of inbound data from an external system at an event detector.

### Additional Example Implementations and Details

In an implementation, the systems or devices described herein (e.g., one or more aspects of the computing environment 110, event detectors 150A, 150B, external systems 120A, 120B, permissioned system 180, LLM 170, and/or the like) may comprise, or be implemented in, a "virtual computing environment". As used herein, the term "virtual computing environment" should be construed broadly to include, for example, computer-readable program instructions executed by one or more processors to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, **FIG. 4** shows a block diagram that illustrates a computer system 1000 upon which various implementations and/or aspects (e.g., one or more aspects of the computing environment 110, event detectors 150A, 150B, external systems 120A, 120B, permissioned system 180, LLM 170, and/or the like) may be implemented. Multiple such computer systems 1000 may be used in various implementations of the present disclosure. Computer system 1000 includes a bus 1002 or other communication mechanism for communicating information, and a hardware processor, or multiple processors, 1004 coupled with bus 1002 for processing information. Hardware processor(s) 1004 may be, for example, one or more general purpose microprocessors.

Computer system 1000 also includes a main memory 1006, such as a random-access memory (RAM), cache and/or other dynamic storage devices, coupled to bus 1002 for storing information and instructions to be executed by processor 1004. Main memory 1006 also may be used for storing temporary variables or other intermediate information during execution of instructions to be executed by processor 1004. Such instructions, when stored in storage media accessible to processor 1004, render computer system 1000 into a special-purpose machine that is customized to perform the operations specified in the instructions. The main memory 1006 may, for example, include instructions to implement server instances, queuing modules, memory queues, storage queues, user interfaces, and/or other aspects of functionality of the present disclosure, according to various implementations.

Computer system 1000 further includes a read only memory (ROM) 1008 or other static storage device coupled to bus 1002 for storing static information and instructions for processor 1004. A storage device 1010, such as a magnetic disk, optical disk, or USB thumb drive (Flash drive), and/or the like, is provided and coupled to bus 1002 for storing information and instructions.

Computer system 1000 may be coupled via bus 1002 to a display 1012, such as a cathode ray tube (CRT) or LCD display (or touch screen), for displaying information to a computer user. An input device 1014, including alphanumeric and other keys, is coupled to bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 1000 may include a user interface module to implement a GUI that may be stored in a mass storage device as computer executable program instructions that are executed by the computing device(s). Computer system 1000 may further, as described below, implement the techniques described herein using customized hard-wired logic, one or more ASICs or FPGAs, firmware, and/or program logic which in combination with the computer system causes or programs computer system 1000 to be a special-purpose machine. According to one implementation, the techniques herein are performed by computer system 1000 in response to processor(s) 1004 executing one or more sequences of one or more computer-readable program instructions contained in main memory 1006. Such instructions may be read into main memory 1006 from another storage medium, such as storage device 1010. Execution of the sequences of instructions contained in main memory 1006 causes processor(s) 1004 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1004 for execution. For example, the instructions may initially be carried on a magnetic disk or solid-state drive of a remote computer. The remote computer can load the instructions into its dynamic memory and send the instructions over a telephone line using a modem. A modem local to computer system 1000 can receive the data on the telephone line and use an infra-red transmitter to convert the data to an infra-red signal. An infra-red detector can receive the data carried in the infra-red signal and appropriate circuitry can place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

Computer system 1000 also includes a communication interface 1018 coupled to bus 1002. Communication interface 1018 provides a two-way data communication coupling to a network link 1020 that is connected to a local network 1022. For example, communication interface 1018 may be an integrated services digital network (ISDN) card, cable modem, satellite modem, or a modem to provide a data communication connection to a corresponding type of telephone line. As another example, communication interface 1018 may be a local area network (LAN) card to provide a data communication connection to a compatible LAN (or WAN component to communicate with a WAN). Wireless links may also be implemented. In any such implementation, communication interface 1018 sends and receives electrical, electromagnetic, or optical signals that carry digital data streams representing various types of information.

Network link 1020 typically provides data communication through one or more networks to other data devices. For example, network link 1020 may provide a connection through local network 1022 to a host computer 1024 or to data equipment operated by an Internet Service Provider (ISP) 1026. ISP 1026 in turn provides data communication services through the worldwide packet data communication network now commonly referred to as the "Internet" 1028. Local network 1022 and Internet 1028 both use electrical, electromagnetic, or optical signals that carry digital data streams. The signals through the various networks and the signals on network link 1020 and through communication interface 1018, which carry the digital data to and from computer system 1000, are example forms of transmission media.

Computer system 1000 can send messages and receive data, including program code, through the network(s), network link 1020 and communication interface 1018. In the Internet example, a server 1030 might transmit a requested code for an application program through Internet 1028, ISP 1026, local network 1022 and communication interface 1018.

The received code may be executed by processor 1004 as it is received, and/or stored in storage device 1010, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds at which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of the implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1: A computer-implemented method for push-based data ingestion, performed under control of one or more hardware computer processors executing program instructions, comprising: establishing communication between an external system and an event detector associated with a permissioned system, wherein the event detector operates on a perimeter network between the external system and the permissioned system; receiving inbound data pushed from the external system to the event detector on the perimeter network; providing the inbound data from the event detector to a data ingestion engine operating on the permissioned system, said data ingestion engine having access to a repository of the permissioned system and configured to interact with said repository; causing said data ingestion engine to execute based on the inbound data, including at least: accessing associated data within the repository of the permissioned system that is associated with the inbound data originating from the external system; validating that the inbound data adheres to one or more ingress rules of the permissioned system based on one or more attributes of said associated data within the repository; and providing a validation indication to the event detector indicating whether the inbound data adheres to the one or more ingress rules; and in response to receipt of the validation indication at the event detector from the data ingestion engine, providing the inbound data from the event detector to the permissioned system.

Clause 2: The computer-implemented method of clause 1, wherein the one or more ingress rules prohibit importing redundant data to the permissioned system, wherein the one or more attributes of the associated data include existence of the associated data in the repository, and wherein validating the inbound data includes checking the existence of the associated data in the repository.

Clause 3: The computer-implemented method of clause 1 or clause 2, wherein the one or more ingress rules require one or more attributes of the inbound data to correspond to the one or more attributes of the associated data, wherein the one or more attributes of the associated data are defined by an ontology of the permissioned system.

Clause 4: The computer-implemented method of any preceding clause, further comprising: generating the validation indication with the data ingestion engine according to the validating that the inbound data adheres to the one or more ingress rules of the permissioned system.

Clause 5: The computer-implemented method of clause 4 further comprising: further generating the validation indication with the data ingestion engine according to egress rules to inhibit data extraction from the permissioned system, said egress rules governing data that can be provided from the data ingestion engine to the event detector.

Clause 6: The computer-implemented method of any preceding clause, further comprising: accessing the repository with the data ingestion engine based on access rules governing access to the repository, said access rules configured to limit scope of access of the data ingestion engine to the repository.

Clause 7: The computer-implemented method any preceding clause, further comprising: providing a response from the event detector to the external system based on the validation indication.

Clause 8: The computer-implemented method of any preceding clause, further comprising: disabling the event detector responsive to determining that communication from the data ingestion engine to the event detector comprises restricted data.

Clause 9: The computer-implemented method of any preceding clause, wherein the perimeter network comprises a dedicated communication endpoint including one or more of an HTTP endpoint, an SMTP endpoint, an FTP endpoint, or an IP address, wherein the dedicated communication endpoint is isolated from other communication endpoints within the permissioned system to inhibit communication between the external system and the other communication endpoints within the permissioned system.

Clause 10: The computer-implemented method of any preceding clause, further comprising: upon receipt of the inbound data at the event detector from the external system, marking the inbound data with markings at the event detector based on a user configuration of the event detector to mark data, said permissioned system configured to respect the markings of the inbound data from the event detector.

Clause 11: The computer-implemented method of any preceding clause, further comprising: accessing the inbound data from the permissioned system with an LLM; generating supplemental data with the LLM based on at least the inbound data; and providing the supplemental data to the external system.

Clause 12: The computer-implemented method of any preceding clause, further comprising: receiving the inbound data at the event detector responsive to an event at the external system.

Clause 13: A system comprising: one or more computer-readable storage mediums configured to store program instructions; and one or more processors configured to execute the program instructions to cause the system to perform the computer-implemented method of any of clauses 1-12.

Clause 14: One or more computer-readable storage mediums configured to store program instructions, the program instructions executable by one or more processors to cause the one or more processors to perform the computer-implemented method of any of clauses 1-12.

## Claims

1. A computer-implemented method for push-based data ingestion, performed under control of one or more hardware computer processors executing program instructions, comprising:
establishing communication between an external system and an event detector associated with a permissioned system, wherein the event detector operates on a perimeter network between the external system and the permissioned system;
receiving inbound data pushed from the external system to the event detector on the perimeter network;
providing the inbound data from the event detector to a data ingestion engine operating on the permissioned system, said data ingestion engine having access to a repository of the permissioned system and configured to interact with said repository;
causing said data ingestion engine to execute based on the inbound data, including at least:
accessing associated data within the repository of the permissioned system that is associated with the inbound data originating from the external system;
validating that the inbound data adheres to one or more ingress rules of the permissioned system based on one or more attributes of said associated data within the repository; and
providing a validation indication to the event detector indicating whether the inbound data adheres to the one or more ingress rules; and
in response to receipt of the validation indication at the event detector from the data ingestion engine, providing the inbound data from the event detector to the permissioned system.

2. The computer-implemented method of claim 1, wherein the one or more ingress rules prohibit importing redundant data to the permissioned system, wherein the one or more attributes of the associated data include existence of the associated data in the repository, and wherein validating the inbound data includes checking the existence of the associated data in the repository.

3. The computer-implemented method of claim 1 or claim 2, wherein the one or more ingress rules require one or more attributes of the inbound data to correspond to the one or more attributes of the associated data, wherein the one or more attributes of the associated data are defined by an ontology of the permissioned system.

4. The computer-implemented method of any preceding claim, further comprising:
generating the validation indication with the data ingestion engine according to the validating that the inbound data adheres to the one or more ingress rules of the permissioned system.

5. The computer-implemented method of claim 4 further comprising:
further generating the validation indication with the data ingestion engine according to egress rules to inhibit data exfiltration from the permissioned system, said egress rules governing data that can be provided from the data ingestion engine to the listener.

6. The computer-implemented method of any preceding claim, further comprising:
accessing the repository with the data ingestion engine based on access rules governing access to the repository, said access rules configured to limit scope of access of the data ingestion engine to the repository.

7. The computer-implemented method of any preceding claim, further comprising:
providing a response from the listener to the external system based on the validation indication.

8. The computer-implemented method of any preceding claim, further comprising:
disabling the listener responsive to determining that communication from the data ingestion engine to the listener comprises restricted data.

9. The computer-implemented method of any preceding claim, wherein the perimeter network comprises a dedicated communication endpoint including one or more of an HTTP endpoint, an SMTP endpoint, an FTP endpoint, or an IP address, wherein the dedicated communication endpoint is isolated from other communication endpoints within the permissioned system to inhibit communication between the external system and the other communication endpoints within the permissioned system.

10. The computer-implemented method of any preceding claim, further comprising:
upon receipt of the inbound data at the listener from the external system, marking the inbound data with markings at the listener based on a user configuration of the listener to mark data, said permissioned system configured to respect the markings of the inbound data from the listener.

11. The computer-implemented method of any preceding claim, further comprising:
accessing the inbound data from the permissioned system with an LLM;
generating supplemental data with the LLM based on at least the inbound data; and
providing the supplemental data to the external system.

12. The computer-implemented method of any preceding claim, further comprising:
receiving the inbound data at the listener responsive to an event at the external system.

13. A system comprising:
one or more computer-readable storage mediums configured to store program instructions; and
one or more processors configured to execute the program instructions to cause the system to perform the computer-implemented method of any of claims 1-12.

14. One or more computer-readable storage mediums configured to store program instructions, the program instructions executable by one or more processors to cause the one or more processors to perform the computer-implemented method of any of claims 1-12.
